# EUROPÄISCHE PATENTSCHRIFT

(11) **EP 2 556 942 B1**
(45) Veröffentlichungstag und Bekanntmachung des Hinweises auf die Patenterteilung: **16.05.2018**
(21) Anmeldenummer: 12180165.8
(22) Anmeldetag: 10.08.2012
(51) Int. Cl.: B29C 45/33, B29C 45/44, B29L 31/00, B29C 45/14

(54) **Spritzgießverfahren und Spritzgießwerkzeug, insbesondere Backenwerkzeug**
Injection moulding method and injection moulding tool, in particular jaw tool
Procédé de moulage par injection et outil de moulage par injection, en particulier moule à coins

(30) Priorität: 11.08.2011 AT 11552011
(43) Veröffentlichungstag der Anmeldung: 13.02.2013
(73) Patentinhaber: Haidlmair Holding GmbH, 4542 Nussbach (AT)
(72) Erfinder: Lichtenwöhrer, Thomas, 4594 Steinbach an der Steyr (AT)
(74) Vertreter: Jell, Friedrich

(56) Entgegenhaltungen:
- DE-A1- 2 849 145
- DE-A1-102004 009 406
- GB-A- 1 160 754
- US-A1- 2008 079 197

## Beschreibung

Die Erfindung betrifft ein Spritzgießverfahren und ein Spritzgießwerkzeug, insbesondere Backenwerkzeug, zur Erzeugung eines mindestens teilweise folienbeschichten Formteils mit einer Kavität für das zu erzeugende Formteil, mit wenigstens zwei, die Kavität teilweise begrenzenden Formbacken, die bei geschlossenem Spritzgießwerkzeug mit ihren Formbackenflächen aneinander angrenzen, mit einer Formplatte, die insbesondere wenigstens teilweise in den vom Formbacken begrenzten Kavitätsteil vorragt, und mit einer mit den Formbacken und der Formplatte verbundenen Führung, die die Formbacken gegenüber der Formplatte beweglich lagert.

Um Formteile mit Hinterschneidungen entformen zu können, sind aus dem Stand der Technik Spritzgießwerkzeuge bzw. Backenwerkzeuge bekannt, die mit beweglichen Formbacken vom Formteil entfernt werden können (DE 42 08 351 C1, US 2008/079197 A1). Des Weiteren ist bekannt, in eine Kavität eine Folie einzulegen, um diese Folie mit einer danach eingebrachten plastischen Masse zu verbinden. Kavitäten von Backenwerkzeugen mit Formplatten die wenigstens teilweise in den vom Formbacken begrenzten Kavitätsteil ragen, sind vergleichsweise schwer mit einer Folie zu versehen. Ein einfaches und genaues Bestücken von Spritzgießwerkzeugen mit Formbacken kann damit nicht gewährleistet werden. Außerdem kann ein positionsgenaues Einbringen einer Folie durch die Formplattenteile im Bereich der Backen meist nicht sichergestellt werden. Eine vergleichsweise hohe Reproduzierbarkeit bei der Herstellung von hinterspritzten Formteilen ist damit nicht möglich.

Die Erfindung hat sich daher die Aufgabe gestellt, ein Spritzgießwerkzeug der eingangs geschilderten Art derart zu verbessern, dass damit auf einfache Weise eine Folie in die Kavität des Werkzeugs eingelegt werden kann.

Die Erfindung löst die gestellte Aufgabe dadurch, dass für eine vereinfachte Folieneinbringung in die Kavität die Führung eine Führungslage der Formbacken mit aneinander angrenzenden Formbackenflächen von der Formplatte beabstandet ausbildet.

Bildet die Führung eine Führungslage der Formbacken mit aneinander angrenzenden Formbackenflächen von der Formplatte beabstandet aus, dann kann eine einfach handhabbare Folieneinbringung bei einem Spritzgießwerkzeug ermöglicht werden, weil sich in dieser zusammengeführten, jedoch von anderen Kavitätsteilen entfernten Lage der Formbacken eine erhöhte Handhabungsfreiheit ergeben kann, die Folie an die Formbacken anzulegen. Insbesondere können damit auch eventuelle Hindernisse, die sich durch die Formplatte ergeben können, wenn diese in den vom Formbacken begrenzten Kavitätsteil vorragt, vernachlässigt werden, was ebenso einem positionsgenauem Einbringen der Folie förderlich sein kann. Die Formbacken können daher auch bei geschlossenem Spritzgießwerkzeug an die Formplatte angrenzen, ohne damit Nachteile befürchten zu müssen. Die erfindungsgemäße Führung, die eine Bewegungsbahn mit einer Führungslage der Formbacken aufweist, bei der die Formbackenflächen zwar aneinander angrenzen, diese Führungslage jedoch eine andere Führungslage als jene zur Ausbildung der Kavität ist, kann die Erfindung gegenüber dem Stand der Technik besonders abgrenzen. Es kann aber nicht nur eine einfache Handhabung zum Bestücken der Kavität mit einer Folie ermöglicht, sondern auch die Herstellung eines formgenauen Formteils sichergestellt werden. Außerdem ist eine derartige Führung konstruktiv vergleichsweise einfach lösbar, da die zusammengeführte Lage der Formbacken lediglich zur Formplatte zugeführt werden muss. Zu diesem Zweck kann die Führung ein oder mehrere Führungsmittel aufweisen. Es bedarf nun auch keiner konstruktiv aufwendigen Handlingvorrichtung, wie diese aus dem Stand der Technik bekannt sind, um so Spritzgießwerkzeuge für ein Hinterspritzen einer Folie mit Kunststoff vorbereiten zu müssen. Ein kostengünstiges und besonders standfestes Spritzgießwerkzeug kann so geschaffen werden.

Die Konstruktionsverhältnisse für die Führung können noch weiter vereinfacht werden, indem die Führung sowohl eine Backenführung zur Führung der Formbacken, als auch eine Linearführung zur Führung der Backenführung gegenüber der Formplatte aufweist. Bekannte Konstruktionen für Backenführungen, beispielsweise Schwalbenschwanzführungen, können damit beibehalten werden - lediglich ein zusätzliches Führungsteil der Führung ist vorzusehen, um damit die Formbacken mit aneinander angrenzenden Formbackenflächen von der Formplatte weg führen zu können. Um den Steuerungsaufwand zu verringern, kann vorgesehen sein, dass Backenführung und Linearführung insbesondere voneinander getrennt betätigbar sind.

Die Konstruktionsverhältnisse für die Führung können noch weiter vereinfacht werden, indem das Backenwerkzeug eine Backenschließplatte aufweist. An diese Backenschließplatte können die Führungsteile der Führung angreifen, indem die Backenführung die Formbacken entlang der Backenschließplatte beweglich lagert und die Linearführung die Backenschließplatte gegenüber der Formplatte beweglich lagert.

Vorteilhaft können Backenführung und Linearführung geneigt zueinander verlaufen, um damit auf konstruktiv einfache Weise eine Führungslage der Formbacken mit aneinander angrenzenden Formbackenflächen zu erzeugen, die sich von der Formplatte beabstandet ausbildet. Die Backenführung kann konstruktiv einfach als Geradführung ausgebildet sein.

Um die Lage der Folie an den Formbacken zu sichern, kann vorgesehen sein, dass die Formbacken Mittel zum Halten einer Folie ausbilden. Damit kann die Position einer Folie verbessert sichergestellt werden.

Vorteilhaft kann das Spritzgießwerkzeug bei einer Spritzgießmaschine verwendet werden, das eine Bestückungseinrichtung, insbesondere einen Handlingroboter, zum Einlegen einer Folie in Abhängigkeit einer Führung der Formbacken des Spritzgießwerkzeugs in eine von der Formplatte beabstandeten Position mit aneinander angrenzenden Formbackenflächen aufweist.

Es ist außerdem Aufgabe der Erfindung, ein Spritzgießverfahren zum Erzeugen eines Formteils mit wenigstens teilweise Folie an der Außenfläche derart zu verbessern, dass damit reproduzierbar engen Toleranzgrenzen hinsichtlich Abweichungen des hergestellten Produkts genügt werden kann.

Die Erfindung löst die Aufgabe hinsichtlich des Spritzgießverfahrens dadurch, dass die Formbacken in eine zur Formplatte beabstandeten Position, jedoch mit aneinander angrenzenden Formbackenflächen geführt wird, in dieser Position eine wenigstens zwei Formbackenflächen wenigstens teilweise überlappende Folie eingebracht wird, wonach das Backenwerkzeug geschlossen wird, um das Formteil in der Kavität des Backenwerkzeugs zu erzeugen.

Werden die Formbacken in eine zur Formplatte beabstandeten Position, jedoch mit aneinander angrenzenden Formbackenflächen geführt, kann einfach handhabbar in dieser Position eine wenigstens zwei Formbackenflächen wenigstens teilweise überlappende Folie eingebracht werden. So kann präzise höchsten Anforderungen genügt werden, selbst wenn an den Stoßflächen von Formbacken eine durchgehende Folie vorzusehen ist. Da sich diese Stoßfläche bis zum Schließen des Backenwerkzeugs nicht mehr öffnen muss, um das Formteil in der Kavität des Backenwerkzeugs zu erzeugen, kann dieses Spritzgießverfahren einfache Handhabung und hohe Formgenauigkeit verbinden und sich dadurch gegenüber dem Stand der Technik besonders auszeichnen.

In den Figuren ist beispielsweise der Erfindungsgegenstand anhand eines Ausführungsbeispiels näher dargestellt. Es zeigen
- Fig. 1: eine Seitenansicht auf das geschlossene Spritzgießwerkzeug in einem Schnitt,
- Fig. 2: eine Seitenansicht auf das geöffnete Spritzgießwerkzeug nach Fig. 1 und
- Fig. 3: eine Seitenansicht auf einen Teil des offenen Spritzgießwerkzeugs mit aneinander angrenzenden Formbacken.

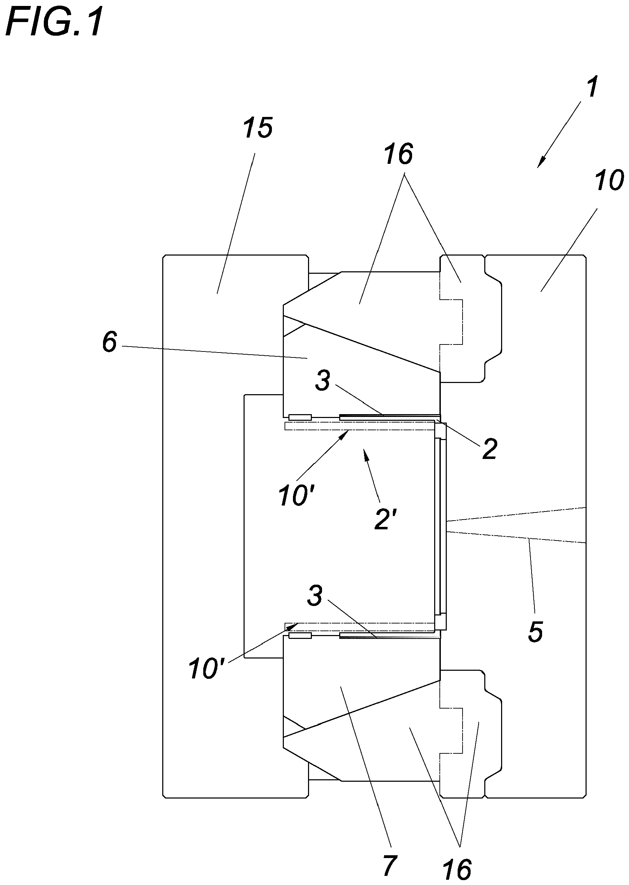

Das nach Fig. 1 dargestellte Spritzgießwerkzeug 1 weist eine Kavität 2 auf, in die eine Folie 3 eingelegt ist. In der Kavität 2 wird ein Formteil 4 erzeugt, wofür über eine nur schematisch dargestellte Angießbuchse 5 plastisches Material in die Kavität 2 eingebracht wird. Die Kavität 2 wird unter anderem von Formbacken 6, 7, 8, 9 begrenzt, die bei geschlossenem Spritzgießwerkzeug 1 mit ihren Formbackenflächen 6', 7', 8', 9' aneinander angrenzen. Die Formbacken 6, 7, 8, 9 schließen an eine Formplatte 10 an, die die Kavität 2 weiter begrenzt. Zwischen den Formbacken 6, 7, 8, 9 und der Formplatte 10 ist eine Führung 11 vorgesehen, die die Formbacken 6, 7, 8, 9 in mehrere Führungslagen bringen kann bzw. diese lagert. Drei Führungslagen sind nach den Figuren 1, 2 und 3 beispielsweise dargestellt.

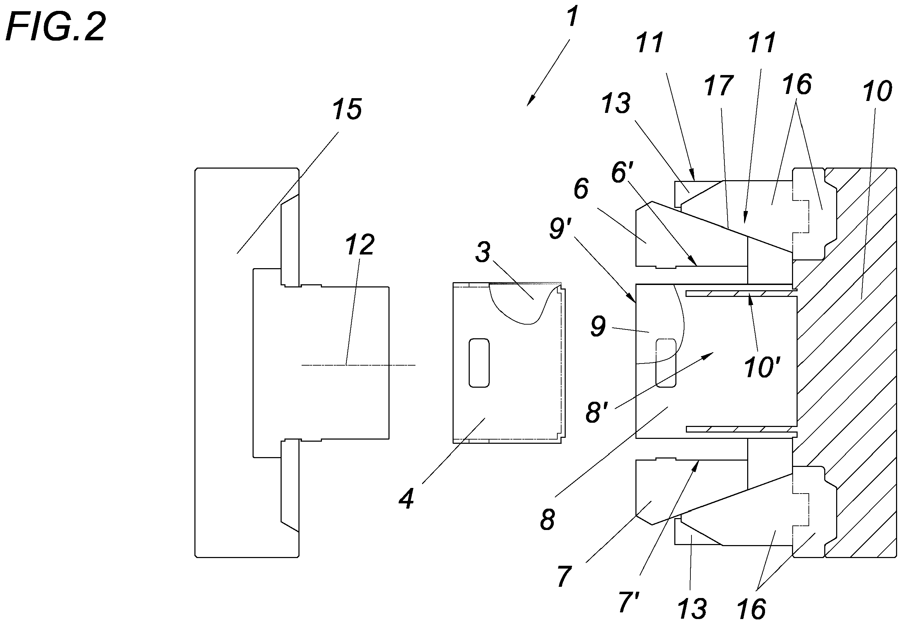

Die Führung 11 erlaubt nun eine zur Werkzeugachse 12 geneigte Verschiebbarkeit der Formbacken 6, 7, 8, 9, um damit beispielsweise einen Hinterschnitt am Formteil 4 für dessen Entformung freigeben zu können. Eine aus dem Stand der Technik bekannte Backenführung 17, insbesondere Schwalbenschwanzführung, ist hierfür vorstellbar. Wie vor allem der Fig. 2 entnommen werden kann, ragt ein Teil 10' der Formplatte 10 in den vom Formbacken 6', 7', 8', 9' begrenzten Kavitätsteil 2' vor. Diese Formgebung der Kavität 2 macht es unter anderem vergleichsweise schwierig, eine Folie 3 in das offene Spritzgießwerkzeug 1 einzulegen.

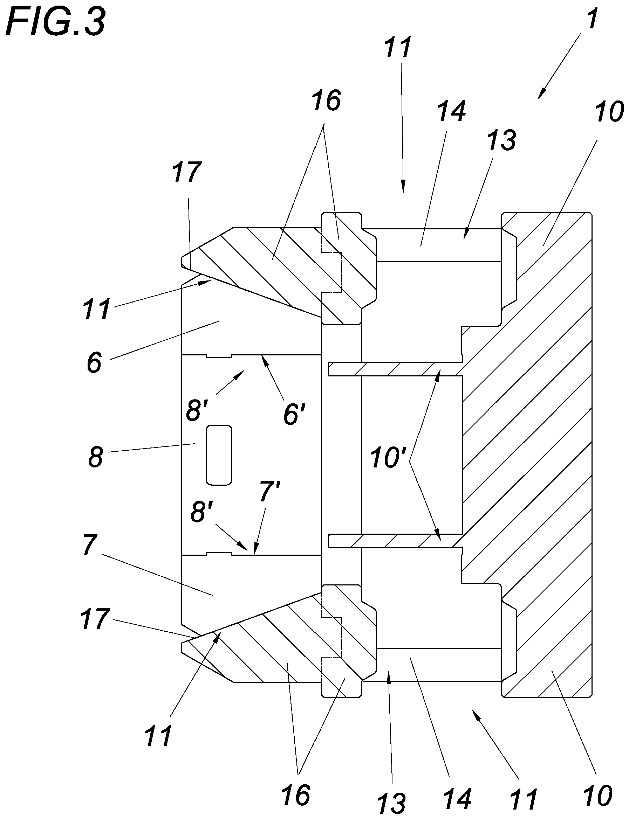

Zur Vereinfachung der entsprechenden Handhabung wird die Führung 11 derart ausgebildet, dass die Formbacken 6, 7, 8, 9 mit aneinander angrenzenden Formbackenflächen 6', 7', 8', 9' von der Formplatte 10 weg geführt werden können. Hierfür weist die Linearführung 13 Führungssäulen 14 auf, die eine Verschiebung der Formbacken 6, 7, 8, 9 in Richtung der Werkzeugachse 12 ermöglichen. Dadurch können, wie in Fig. 3 näher dargestellt, die Formbacken 6, 7, 8, 9 in eine geschlossene Position bzw. Lage gebracht werden, ohne dass damit auch - wie aus dem Stand der Technik bekannt - das Spritzgießwerkzeug 1 geschlossen werden muss. Diese Führungslage der Formbacken 6, 7, 8, 9 an der Führung 11 ist nämlich von den Voraussetzungen der Kavitätsformgebung durch andere Teile des Spritzgießwerkzeugs 1 entkoppelt, sodass sich damit beispielsweise auch der Teil 10' der Formplatte 10 beim Einlegen der Folie 3 nicht störend auswirkt. Ebenso ist dadurch eine vergleichsweise hohe Positionsgenauigkeit der Folie beim Einlegen zu erreichen, sodass präzise Formteile 4 erzeugt werden können. Ein präzises und reproduzierbares Spritzgießverfahren zum Hinterspritzen von Folien 3 kann so ermöglicht werden. Das Formteil 4 kann in bekannter Weise vom Formkern 15 des Spritzgießwerkzeugs 1 entformt werden, wie dies andeutungsweise der Fig. 2 entnommen werden kann.

Einfache Konstruktionsverhältnisse für die Führung 11 ergeben sich, wenn zwischen Formbacken 6, 7, 8, 9 und Formplatte 10 eine Backenschließplatte 16 vorgesehen ist. Je eine zur Werkzeugachse 12 geneigte Backenführung 17 ist zwischen den Formbacken 6, 7, 8, 9 und der Backenschließplatte 16 vorgesehen, wohingegen die zur Werkzeugachse 12 parallele Führung mit Hilfe der Führungssäulen 14 zwischen der Formplatte 10 und der Backenschließplatte 16 vorgesehen ist.

Damit kann außerdem eine zwischen den beiden Führungsteilen unabhängig ansteuerbare zweiachsige Führung 11 ermöglicht werden. Zudem können aus dem Stand der Technik bekannten Backenführungen 17, zum Beispiel Geradführungen, verwendet werden. Lediglich ein zusätzliches Führungsteil, und zwar die Linearführung 13, ist dann vorzusehen, um die Backen 6, 7, 8, 9 in geschlossener Lage von der Formplatte 10 wegbewegen zu können. Einfache Konstruktionsverhältnisse und damit ein kostengünstiges Spritzgusswerkzeug 1 kann so geschaffen werden.

Außerdem können sich damit vereinfachte Verfahrensverhältnisse für ein Spritzgießverfahren zum Hinterspritzen einer Folie 3 ergeben, weil in der nach Fig. 3 dargestellten Position der Formbacken 6, 7, 8, 9 vergleichsweise einfach handhabbar eine zu hinterspritzende Folie 3 in die Formbacken 6, 7, 8, 9 eingebracht werden kann.

## Patentansprüche

1. Spritzgießwerkzeug, insbesondere Backenwerkzeug, zur Erzeugung eines mindestens teilweise folienbeschichten Formteils (4) mit einer Kavität (2) für das zu erzeugende Formteil (4), mit wenigstens zwei, die Kavität (2) teilweise begrenzenden Formbacken (6, 7, 8, 9), die bei geschlossenem Spritzgießwerkzeug (1) mit ihren Formbackenflächen (6', 7', 8', 9') aneinander angrenzen, mit einer Formplatte (10) und mit einer mit den Formbacken (6, 7, 8, 9) und der Formplatte (10) verbundenen Führung (11), die die Formbacken (6, 7, 8, 9) gegenüber der Formplatte (10) beweglich lagert, **dadurch gekennzeichnet, dass** das Spritzgießwerkzeug (1) eine Backenschließplatte (16) aufweist und dass für eine vereinfachte Folieneinbringung in die Kavität (2) die Führung (11) eine Führungslage der Formbacken (6, 7, 8, 9) mit aneinander angrenzenden Formbackenflächen (6', 7', 8', 9') von der Formplatte (10) beabstandet ausbildet, in dem die Führung (11) sowohl eine Backenführung (17) zur Führung der Formbacken (6, 7, 8, 9), als auch eine Linearführung (13) zur Führung der Backenführung (17) gegenüber der Formplatte (10) aufweist, wobei die Backenführung (17) die Formbacken (6, 7, 8, 9) entlang der Backenschließplatte (16) beweglich lagert und die Linearführung (13) die Backenschließplatte (16) gegenüber der Formplatte (10) beweglich lagert, wobei die Backenführung (17) und die Linearführung (13) geneigt zueinander verlaufen.

2. Spritzgießwerkzeug nach Anspruch 1, **dadurch gekennzeichnet, dass** die Formplatte (10) wenigstens teilweise in den vom Formbacken (6, 7, 8, 9) begrenzten Kavitätsteil (2') vorragt.

3. Spritzgießwerkzeug nach Anspruch 1 oder 2, **dadurch gekennzeichnet, dass** die Backenführung (17) und Linearführung (13) voneinander getrennt betätigbar sind.

4. Spritzgießwerkzeug nach einem der Ansprüche 1 bis 3, **dadurch gekennzeichnet, dass** die Backenführung (17) als Geradführung ausgeführt ist.

5. Spritzgießwerkzeug nach einem der Ansprüche 1 bis 4, **dadurch gekennzeichnet, dass** die Formbacken (6, 7, 8, 9) Mittel zum Halten einer Folie (3) ausbilden.

6. Verwendung eines Spritzgießwerkzeugs (1) nach einem der Ansprüche 1 bis 5 bei einer Spritzgießmaschine, aufweisend eine Bestückungseinrichtung, insbesondere einen Handlingroboter, zum Einlegen einer Folie (3) in Abhängigkeit einer Führung der Formbacken (6, 7, 8, 9) des Spritzgießwerkzeugs (1) in eine von der Formplatte (10) beabstandeten Position mit aneinander angrenzenden Formbackenflächen (6', 7', 8', 9').

7. Spritzgießverfahren zum Erzeugen eines Formteils (4) mit einer wenigstens teilweisen Folie (3) an der Außenfläche, bei dem die Folie (3) in ein offenes Backenwerkzeug (1) eingebracht und das Backenwerkzeug (1) geschlossen wird, wonach in der Kavität (2) des Backenwerkzeugs (1) das Formteil (4) erzeugt wird, wobei die Kavität (2) wenigstens teilweise von den Formbacken (6, 7, 8, 9) und eine Formplatte (10) des Backenwerkzeugs (1) begrenzt wird, **dadurch gekennzeichnet, dass** bei offenem Backenwerkzeug (1) die Formbacken (6, 7, 8, 9) in eine zur Formplatte (10) beabstandeten Position, jedoch mit aneinander angrenzenden Formbackenflächen (6', 7', 8', 9') geführt wird, in dieser Position eine wenigstens zwei Formbackenflächen (6', 7', 8', 9') wenigstens teilweise überlappende Folie (3) eingebracht wird, wonach das Backenwerkzeug (1) geschlossen wird, um das Formteil (4) in der Kavität (2) des Backenwerkzeugs (1) zu erzeugen.

## Claims

1. Injection-moulding tool, more particularly a split mould, for generating at least one partially film-coated moulding (4) with a cavity (2) for the moulding (4) to be produced with at least two mould blocks (6, 7, 8, 9) restricting the cavity (2) partially, the mould block surfaces (6', 7', 8', 9') of which are adjacent to each other when the injection moulding tool (1) is closed, with a mould plate (10) and with a guide (11) connected to the mould blocks (6, 7, 8, 9) and the mould plate (10), that supports the mould blocks (6, 7, 8, 9) against the mould plate (10) so they can move, **characterised in that** the injection moulding tool (1) exhibits a block closing plate (16) and that, to simplify the introduction of the film into the cavity (2), the guide (11) forms a guide layer of the mould blocks (6, 7, 8, 9) with mutually adjacent mould block surfaces (6', 7', 8', 9') distanced from the mould plate (10), in which the guide (11) exhibits both a block guide (17) to guide the mould blocks (6, 7, 8, 9) and a linear guide (13) to guide the block guide (17) against the mould plate (10), wherein the block guide (17) supports the mould blocks (6, 7, 8, 9) so they can move along the block closing plate (16), and the linear guide (13) supports the block closing plate (16) so that it can move against the mould plate (10), wherein the block guide (17) and the linear guide (13) run at a mutual incline.

2. Injection-moulding tool according to claim 1, **characterised in that** the mould plate (10) protrudes at least partially into the cavity part (2') delineated by the mould blocks (6, 7, 8, 9).

3. Injection-moulding tool according to claim 1 or 2, **characterised in that** the block guide (17) and linear guide (13) can be operated separately from each other.

4. Injection-moulding tool according to any one of claims 1 to 3, **characterised in that** the block guide (17) is designed as a straight guide.

5. Injection-moulding tool according to any one of claims 1 to 4, **characterised in that** the mould blocks (6, 7, 8, 9) form means of holding a film (3).

6. Usage of an injection-moulding tool (1) according to any one of claims 1 to 5 with an injection-moulding machine, exhibiting a placement device, more particularly a handling robot, for inserting the film (3) depending on a guide of the mould blocks (6, 7, 8, 9) of the injection-moulding tool (1) into a position distanced from the mould plate (10) with mutually-adjacent mould block surfaces (6', 7', 8', 9').

7. Injection-moulding process for producing a moulding (4) with at least a partial film (3) on the outer surface, in which the film (3) is introduced into an open block tool (1) and the block tool (1) is closed, after which the moulding (4) is produced in the cavity (2) of the block tool (1), wherein the cavity (2) is restricted at least partially by the mould blocks (6, 7, 8, 9) and a mould plate (10) of the block tool (1), **characterised in that**, with the block tool (1) opened, the mould blocks (6, 7, 8, 9) are guided into a position distanced from the mould plate (10), but with the mould block surfaces (6', 7', 8', 9') mutually adjacent, in this position a film (3) at least partially overlapping at least two mould block surfaces (6', 7', 8', 9') is introduced, after which the block tool (1) is closed to produce the moulding (4) in the cavity (2) of the block tool (1).

## Revendications

1. Outil de moulage par injection, notamment outil à mâchoires, destiné à la fabrication d'une pièce moulée (4) au moins partiellement revêtue d'un film, dotée d'une cavité (2) pour la pièce moulée (4) à produire, avec au moins deux mâchoires de moule (6, 7, 8, 9) délimitant partiellement la cavité (2), lesquelles sont attenantes l'une à l'autre en leur surface de mâchoires de moule (6', 7', 8', 9') lorsque l'outil de moulage par injection (1) est fermé, avec une plaque de moule (10) et avec un guidage (11) relié aux mâchoires de moule (6, 7, 8, 9) et à la plaque de moule (10), lequel guidage dispose de manière mobile les mâchoires de moule (6, 7, 8, 9) par rapport à la plaque de moule (10), **caractérisé en ce que** l'outil de moulage par injection (1) présente une plaque de fermeture de mâchoires (16) et que pour faciliter l'application du film dans la cavité (2), le guidage (11) forme une situation de guidage des mâchoires de moule (6, 7, 8, 9) dans laquelle les surfaces de mâchoires de moule (6', 7', 8', 9') sont espacées de la plaque de moule (10), le guidage (11) présentant aussi bien un dispositif de guidage des mâchoires (17) pour guider les mâchoires de moule (6, 7, 8, 9) qu'un dispositif de guidage linéaire (13) pour guider le dispositif de guidage des mâchoires (17) par rapport à la plaque de moule (10), le dispositif de guidage des mâchoires (17) disposant les mâchoires de moule (6, 7, 8, 9) de manière mobile le long de la plaque de fermeture des mâchoires (16) et le dispositif de guidage linéaire (13), lui, disposant la plaque de fermeture des mâchoires (16) de manière mobile par rapport à la plaque de moule (10), le dispositif de guidage des mâchoires (17) et le dispositif de guidage linéaire (13) étant inclinés l'un vers l'autre.

2. Outil de moulage par injection selon la revendication 1, **caractérisé en ce que** la plaque de moule (10) dépasse en saillie au moins partiellement de la partie en cavité (2') délimitée par les mâchoires de moule (6, 7, 8, 9).

3. Outil de moulage par injection selon la revendication 1 ou 2, **caractérisé en ce que** le dispositif de guidage des mâchoires (17) et le dispositif de guidage linéaire (13) peuvent être actionnés indépendamment l'un de l'autre.

4. Outil de moulage par injection selon l'une quelconque des revendications 1 à 3, **caractérisé en ce que** le dispositif de guidage des mâchoires (17) est réalisé en tant que guidage rectiligne.

5. Outil de moulage par injection selon l'une quelconque des revendications 1 à 4, **caractérisé en ce que** les mâchoires de moule (6, 7, 8, 9) constituent des moyens pour maintenir un film (3).

6. Utilisation d'un outil de moulage par injection (1) selon l'une quelconque des revendications 1 à 5 pour une machine de moulage par injection, présentant un mécanisme de prise et de pose de composants, notamment un robot de manutention, pour mettre un film (3), en fonction d'un guidage des mâchoires de moule (6, 7, 8, 9) de l'outil de moulage par injection (1), dans une position espacée de la plaque de moule (10) dans laquelle les surfaces de mâchoires de moule (6', 7', 8', 9') sont attenantes les unes aux autres.

7. Procédé de moulage par injection pour fabriquer une pièce moulée (4) dotée d'un film (3) au moins partiel sur la surface extérieure, dans lequel le film (3) est mis dans un outil à mâchoires (1) ouvert et ledit outil à mâchoires (1) est fermé, à la suite de quoi la pièce moulée (4) est produite dans la cavité (2) dudit outil à mâchoires (1), ladite cavité (2) étant délimitée au moins partiellement par les mâchoires de moule (6, 7, 8, 9) et une plaque de moule (10) de l'outil à mâchoires (1), **caractérisé en ce que**, lorsque l'outil à mâchoires (1) est ouvert, les mâchoires de moule (6, 7, 8, 9) sont dans une position espacée de la plaque de moule (10) mais où les surfaces des mâchoires de moule (6', 7', 8', 9') sont attenantes les unes aux autres, dans cette position est déposé un film (3) recouvrant au moins partiellement au moins deux surfaces de mâchoire de moule (6', 7', 8', 9'), à la suite de quoi l'outil à mâchoires (1) est fermé pour produire la pièce moulée (4) dans la cavité (2) de l'outil à mâchoires (1).
